# EUROPEAN PATENT SPECIFICATION

(11) **EP 3 073 784 B1**
(45) Date of publication and mention of the grant of the patent: **16.09.2020**
(21) Application number: 15290086.6
(22) Date of filing: 27.03.2015
(51) Int. Cl.: H04W 36/00

(54) **TERMINAL FOR A CELLULAR COMMUNICATIONS NETWORK AND METHOD OF OPERATING A TERMINAL**
ENDGERÄT FÜR EIN ZELLULARES KOMMUNIKATIONSNETZWERK UND VERFAHREN ZUM BETRIEB EINES ENDGERÄTES
TERMINAL POUR UN RÉSEAU DE COMMUNICATION CELLULAIRE ET PROCÉDÉ DE FONCTIONNEMENT D'UN TERMINAL

(43) Date of publication of application: 28.09.2016
(73) Proprietor: Alcatel Lucent, 91620 Nozay (FR)
(72) Inventor: Zeller, Dietrich, 70435 Stuttgart (DE); Bakker, Hajo, 70435 Stuttgart (DE); Aziz, Danish, 70435 Stuttgart (DE); Dötsch, Uwe, 70435 Stuttgart (DE)
(74) Representative: DREISS Patentanwälte PartG mbB

(56) References cited:
- WO-A1-2008/085838
- US-A1- 2003 040 311
- "3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.4.1, 7 January 2015 (2015-01-07), pages 1-410, XP050927575, [retrieved on 2015-01-07]
- "3rd Generation Partnership Project; Technical Specification Group Radio Access Network; Radio Resource Control (RRC); Protocol specification (Release 12)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.5.0, 25 March 2015 (2015-03-25), pages 1-2225, XP050928109, [retrieved on 2015-03-25]

## Description

### Field of the invention

The invention relates to a terminal for a cellular communications network. The invention further relates to a method of operating such terminal.

Still further, the present invention relates to a transmission coordinator device and to a method of operating such transmission coordinator device.

### Background

State of the art cellular communications networks such as e.g. UMTS or LTE networks provide handover mechanisms requiring a certain amount of signalling on the air interface between terminals and serving base stations.

US 2003/040311 A1 discloses a system and method for managing communications in a mobile terminal.

WO 2008/085838 A1 discloses a method for handover using a handover candidate set.

3GPP STANDARD 3GPP TS 36.331, V 12.4.1, 7 January 2015, specifies a Radio Resource Control protocol for a radio interface between UE and E-UTRAN as well as for a radio interface between RN and E-UTRAN.

3GPP STANDARD 3GPP TS 25.331, V 12.5.0, 25 March 2015, specifies a Radio Resource Control protocol for the UE-UTRAN radio interface.

### Summary

The invention is defined by the appended claims.

It is an objective of the present invention to provide an improved terminal and method of operating a terminal which reduce the signalling load, especially on the air interface.

According to the present invention, regarding the terminal, this object is achieved by the terminal being configured to maintain a first set of at least n many radio cells of said communications network, wherein n is equal to or greater than three (n>=3), wherein a quality measure value of each of said n many radio cells, which depends on a received signal power associated with reference signals transmitted in said cells and received by said terminal, exceeds a first threshold, to determine whether a quality measure value of a further radio cell, which is not comprised in the first set, exceeds a predetermined second threshold, which is greater than said first threshold, and to, if said quality measure value of said further radio cell exceeds said second threshold, modify said first set by including said further radio cell to said first set, whereby a second set is obtained.

By maintaining the first set of radio cells and eventually modifying said first set of radio cells to obtain the second set of radio cells, the terminal advantageously provides information indicative of an area - in terms of radio cells - with a comparatively high probability of successfully establishing data communications with the terminal even without knowledge of the terminal's precise geographic location. Rather, according to the principle of the embodiments, the first set of radio cells or a modified set derived therefrom, i.e. the second set of radio cells, comprises a plurality of radio cells that may potentially be used for serving the terminal. Insofar, the area covered by the first set and second set according to the embodiments may also be considered as a "UE centric tracking area" within which the terminal may be assumed to be located for a considerable amount of time, as compared to the presence of a conventional terminal within a single radio cell.

According to an embodiment, the set of radio cells, either the first set or the second set, or any further set potentially derived therefrom, may e.g. be maintained, or kept, in form of a list, preferably an ordered list or a table or the like. In case of an ordered list or ordered table, the ordering may e.g. be performed depending on said quality measure value associated to the respective radio cells, preferably in a descending order, so that the radio cell with the greatest quality measure value is the first element in said list/table.

Advantageously, the terminal is configured to report said first set to a further device, preferably to a base station of the communications network. This advantageously enables the base station or generally, the network-side elements of the communications network, to exploit the knowledge associated with the UE centric tracking area defined by the first and/or second and/or potentially further sets of radio cells according to the embodiments. In other words, after receiving the first set from a terminal according to the embodiments, a base station (or any other network-side entity of a cellular communications network, respectively) may use the information on the various radio cells manifested by the first set according to the embodiments for coordinating (i.e., forwarding and/or planning and/or scheduling) downlink data traffic in an efficient manner without requiring conventional handover mechanisms to be performed at a comparatively high temporal rate. Hence, advantageously, by exploiting the knowledge associated with the first and second sets according to the embodiments, a signalling load imparted on the air interface of conventional cellular communications systems and on other devices such as e.g. mobility management entities or the like may be avoided.

Alternatively to or in addition to the terminal being configured to report the first set to a further device, i.e. base station, the terminal may also report said second set of radio cells (or any further set derived therefrom according to the principle of the embodiments) to such further device, i.e. the base station. Alternatively to reporting said first and/or second set(s) to a base station, this information may advantageously also be forwarded or reported, respectively, to a transmission coordinator device which may be employed for forwarding downlink data to be transmitted to the terminal depending on said first set and/or said second set. According to a preferred embodiment, the functionality of such transmission coordinator device may be integrated in a base station of the cellular communications network or a MME (mobility management entity) or the like. According to further embodiments, said functionality of the transmission coordinator device may also be embodied in another discrete external device, i.e. external to a base station or the MME.

Alternatively to or in addition to the aforementioned variants, according to a further embodiment, the functionality of the transmission coordinator device may also be distributed over a plurality of entities of a cellular communications network such as a plurality of base stations and/or mobility management entities or the like.

According to a further embodiment, said terminal is configured to determine said first set upon an initialization process and/or upon an initial access to said cellular communications network.

According to a further embodiment, also upon an initialization process and/or initial access to said network, after determination of said first set of radio cells, said first set may be reported to a further device. The further device may e.g. be a base station such as a base station currently serving the terminal and/or a neighbouring base station of the serving base station and/or any .other network entity of a cellular communications network.

According to a preferred embodiment, the step of determining said first set of at least n many radio cells comprises measuring at least one parameter characterizing a received signal strength or received signal power associated with reference signals transmitted in the respective cells. When extending a conventional 4G system such as e.g. the LTE system by applying the principles according to the embodiments, conventional LTE measurement reports regarding the reference signal received power (RSRP) may be employed, which indicate a received power of the per se known reference signals transmitted in the downlink of LTE radio cells.

According to a particularly preferred embodiment, the quality measure employed according to the embodiments is directly derived from the RSRP measurements as known from the LTE systems or may be identical to RSRP values as obtained by conventional systems.

Evidently, the principle according to the embodiments is not limited to 4G or LTE systems, but may generally applied to any cellular communications network.

According to further embodiments, the process of determining the first set of radio cells may also comprise a base station, preferably a serving base station of the terminal, providing said first set of radio cells to the terminal based e.g. on previous measurements and/or based on knowledge about geographic locations of the terminal and base stations spatially close to the terminal.

According to a further embodiment, the terminal is configured to report said second set to a further device, preferably to a base station of said communications network which advantageously enables said base station to update its knowledge about the potentially useable radio cells for forwarding downlink data to the terminal. According to a further embodiment, alternatively to or in addition to reporting the second set to a base station, it may also be forwarded or reported to a transmission coordinator device, in analogy to the above-explained embodiments directed to reporting the first set of radio cells.

Advantageously, according to particularly preferred embodiments, said step of reporting the second set of radio cells to a further device such as e.g. a base station, is performed upon said step of modifying, and more preferably, the reporting of the second set of radio cells is only performed upon said step of modifying. In effect, this means, that for real-life operating scenarios of cellular communications networks the frequency of transmitting the first set and/or a second set or further sets of radio cells derived therefrom is lower than a frequency of conventional signalling messages on the air interface and/or to an MME required for conventional handover procedures. In other words, particularly for comparatively large values of the parameter n according to the embodiments, comparatively few reporting events (for reporting a first set, a second set, and the like) will occur in contrast to conventional signalling procedures involved in handshake handover processes.

According to a further preferred embodiment, the parameter n is greater than 7, more preferably greater than 10. As a consequence, the "UE centric tracking area" represented by the first and second sets of radio cells according to the embodiments is comparatively large thus avoiding high frequency signaling. Generally, the larger the UE centric tracking area (i.e., the larger n is chosen), the less often a reporting step of a modified set of radio cells corresponding with an updated UE centric tracking area is necessary.

According to a further preferred embodiment, said second threshold is chosen such that it is greater than a quality measure value of the cell of the first set with the m-th best quality measure value within said first set, wherein m ranges between 1 and n-1, wherein preferably m = 1. Especially, for m = 1, a second set of radio cells is only derived from said first set if a further radio cell, which is hitherto not comprised in the first set, exceeds regarding its quality measure value the presently best (m=1) quality measure value of the best radio cell of the first set. According to Applicant's consideration, this will only take place if a roaming terminal is comparatively close to said further radio cell, wherein it can be expected that it is not likely that the terminal moves back to the "core area" of the first set of radio cells. In this case, it is justified to modify the first set of radio cells to obtain the second set of radio cells thus updating the UE centric tracking area.

According to a further preferred embodiment, the terminal is configured to leave said first set of radio cells unmodified if said further radio cell does not exceed said second threshold or, of course, if no further radio cell may be determined at all.

According to a further embodiment, said terminal is configured to determine said first set depending on at least one of: radio measurements, control information received from a further device of said network, a geographical location of said terminal, a geographical location of a base station currently serving said terminal.

According to a further embodiment, the terminal may also modify the first set depending on one or more of the aforementioned types of information. According to a further embodiment, the terminal may also modify said second set depending on one or more types of the aforementioned information.

For example, a terminal according to the embodiments may modify an existing set of radio cells, e.g. a first set of radio cells, without any measurements, based on knowledge about a geographic location of a further base station which could provide suitable radio cell(s) that may yield a greater quality measure value as one or more radio cells currently comprised within the set of radio cells.

According to a further embodiment, the terminal may apply steps of determining whether a quality measure value of a further radio cell, which is not comprised in the present set of radio cells, exceeds a predetermined second threshold, which is greater than said first threshold, and modify the present set of radio cells to obtain a third or further set of radio cells. In other words, the principle according to the embodiments may also be employed iteratively or continuously in order to continuously update the information of a UE centric tracking area of said terminal represented by the set of radio cells.

According to a further preferred embodiment, the terminal performs the steps of maintaining the first set of radio cells, determining a further radio cell and modifying said first set only if said terminal currently handles traffic with a mean data rate ranging between 10 bytes per second and 1000 bytes per second, preferably ranging between 10 bytes per second and 100 bytes per second. For higher mean data rates, conventional handover mechanisms may be employed and no maintaining of the first or further sets of radio cells or any modification thereof is required.

According to a further preferred embodiment, a time interval between reporting said first set of radio cells and said second set of radio cells, is equal to or greater than 60 seconds, preferably equal to or greater than 120 seconds. According to a further preferred embodiment, a time interval between reporting an r-th set of radio cells and an (r+1)-th set of radio cells obtained by modifying said r-th set of radio cells, is equal to or greater than 60 seconds, preferably equal to or greater than 120 seconds.

A further solution to the object of the present invention is given by a method of operating a terminal according to claim 8.

According to a preferred embodiment, said terminal performs, particularly when there is new data for transmission in an uplink direction, one or more of the following steps: sending a scheduling request towards a base station having a highest quality measure value of said first set and/or said second set, and/or performing a connectionless transmission in the uplink direction, and/or performing a random access channel, RACH, access.

According to an embodiment, a bearer service is connectionless, if all switches/routers on a bearer path associated with said bearer service need not to be configured in advance of a forwarding of a packet.

Yet another solution to an object of the present invention is provided by a transmission coordinator device according to claim 10. As already outlined above, the functionality of the transmission coordinator device may e.g. be located in a discrete device external to a base station of the cellular communications network. However, according to further embodiments, the functionality of the transmission coordinator device may also be integrated in one or more base stations of the network. Also, the functionality of the transmission coordinator device may be distributed to the various devices of the cellular communications network.

According to a preferred embodiment, said transmission coordinator device is configured to perform one or more of the following steps:
transfer a UE context and/or a UE identifier associated with a terminal to one or more further devices, wherein preferably said one or more further devices are associated with a radio cell of said first set and/or said second set, set up a signalling tunnel with a further device, wherein preferably said further device is associated with a radio cell of said first set and/or said second set.

Further preferred embodiments are presented by the dependent claims.

A further solution to still another object of the present invention is provided by the method of operating a transmission coordinator device according to claim 14.

Still another solution is provided by a cellular communications network configured to receive said first set of radio cells and/or a second (and/or further) set of radio cells provided by a terminal according to the embodiments, and to forward data to be transmitted to said terminal depending on said set(s).

According to an advantageous embodiment, the principle of the UE centric tracking area embodied by the first and further sets of radio cells is only employed in particular operational scenarios such as e.g. depending on specific traffic types handled by (e.g., transmitted to and/or received from) a terminal. For example, the principle of the embodiments is particularly beneficial if applied in such operational scenarios where the terminal handles low-rate, especially sporadic, traffic as typically generated by a user of the terminal being involved in instant messaging applications or the like, whereas for high-data rate applications such as media streaming, conventional handover mechanisms may be relied upon.

### Brief description of the figures

Further features, aspects and advantages of the present invention are given in the following detailed description with reference to the drawings in which:
- Figure 1: schematically depicts a cellular communications network with a terminal according to an embodiment,
- Figure 2a, 2b, 2c, 3: depict various operational scenarios according to the embodiments,
- Figure 4: schematically depicts a simplified flow chart of a method according to an embodiment,
- Figure 5a, 5b: schematically depict tables representing sets of radio cells according to further embodiments, and
- Figure 6: schematically depicts a simplified flow chart of a method according to a further embodiment.

### Description of the embodiments

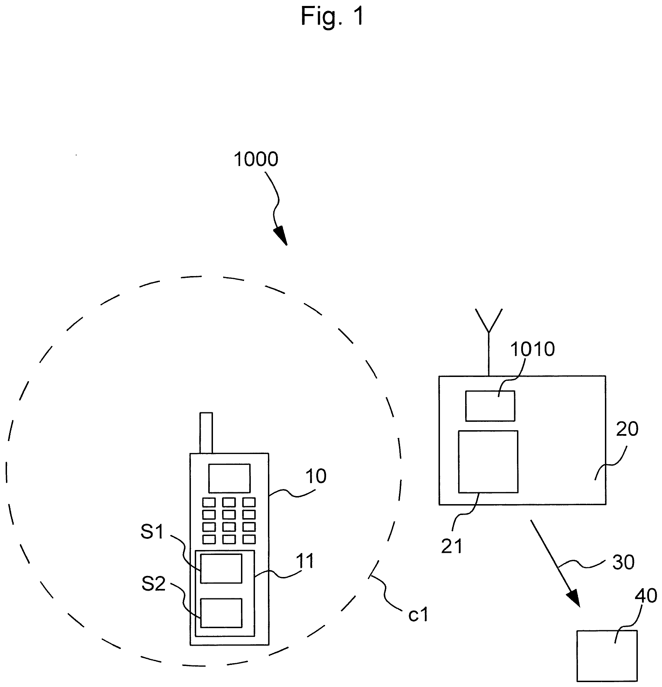

Figure 1 schematically depicts a cellular communications network 1000. A terminal 10, which may be a mobile terminal such as a smartphone or the like, is depicted moving within a radio cell c1 provided by a base station 20 of the network 1000. The base station 20 serves the terminal 10 in a per se known manner by providing the radio cell c1 as well as (optionally) further radio cells, which are not depicted for the sake of clarity in figure 1. According to some embodiments, the base station 20 may exchange data, cf. the arrow 30, with further devices 40 which will be explained below in further detail.

The terminal 10 comprises a processing unit 11 such as e.g. a microcontroller or digital signal processor or the like which may control an operation of the terminal 10 in a per se known manner. Also, the processing unit 11 may be configured to perform aspects of the method according to the embodiments as explained below.

The base station 20 may also comprise a processing unit 21 such as e.g. a microcontroller or digital signal processor or the like which may control an operation of the base station 20 in a per se known manner. Also, the processing unit 21 may be configured to perform aspects of the method according to the embodiments as explained below.

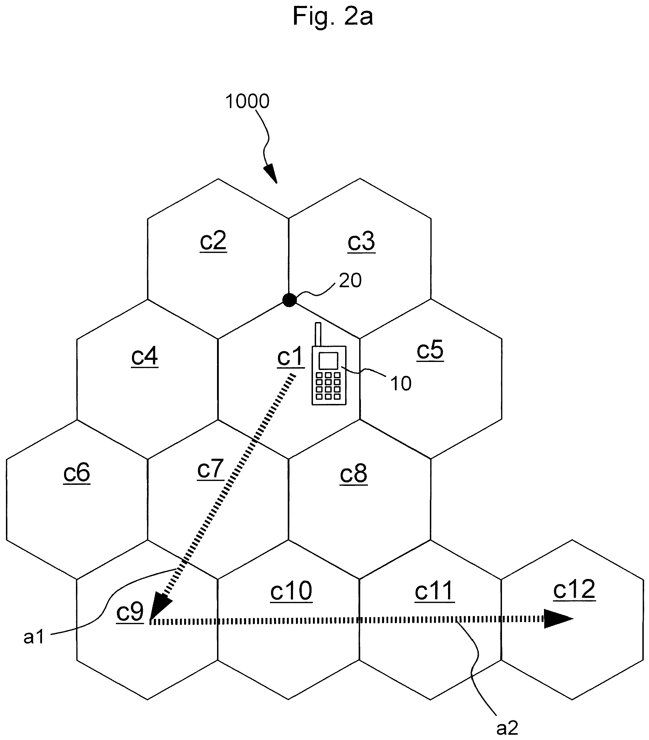

Figure 2a schematically depicts an operational scenario of the terminal 10. In contrast to the simplified depiction of figure 1, figure 2a additionally depicts further radio cells c2, c3, c4, c5, c6, c7, c8, c9, c10, c11, c12.

Presently, the base station 20 provides the three radio cells c1, c2, c3 in a per se known manner, said cells c1, c2, c3 e.g. corresponding to three "sectors" of an overall radio coverage area provided by the base station 20.

Likewise, the further cells depicted by figure 2a may be provided by further base stations (not shown) of the network 1000.

The arrows a1, a2 of figure 2a indicate that terminal 10 is moving within the coverage area of the radio cells c1, .., c12. Arrow a1 indicates a substantially linear movement of the terminal 10 from the present radio cell c1 through cell c7 to cell c9. After that, arrow a2 indicates a similar movement through cells c10, c11 to cell c12.

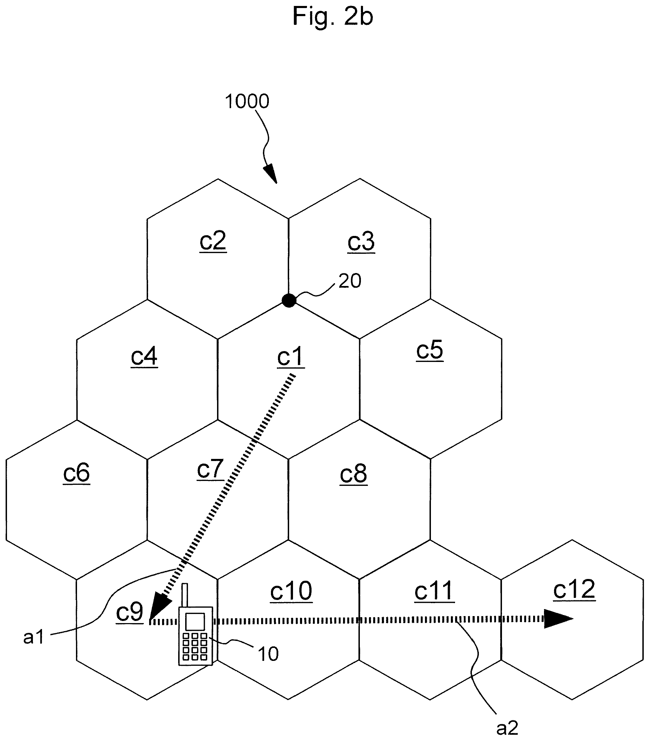

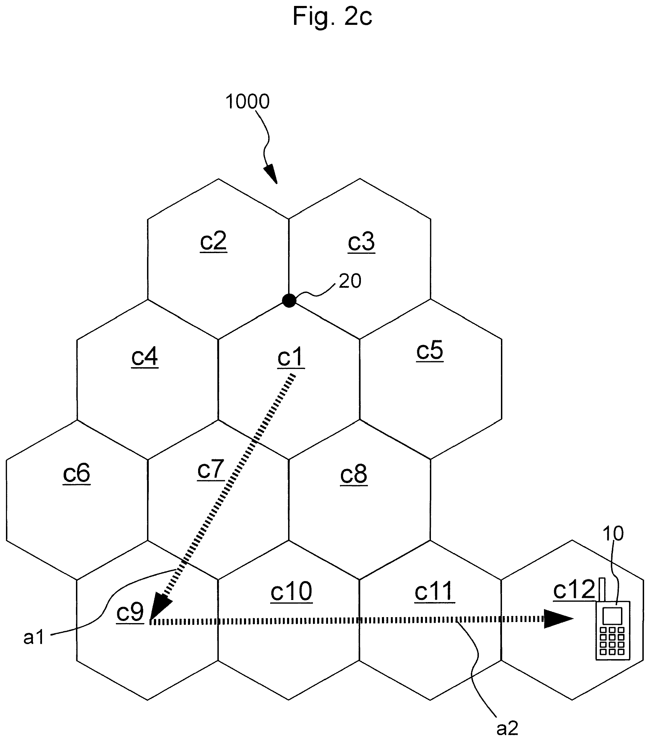

Figure 2b depicts the terminal 10 as arrived within cell c9, whereas figure 2c depicts terminal 10 as arrived within cell c12.

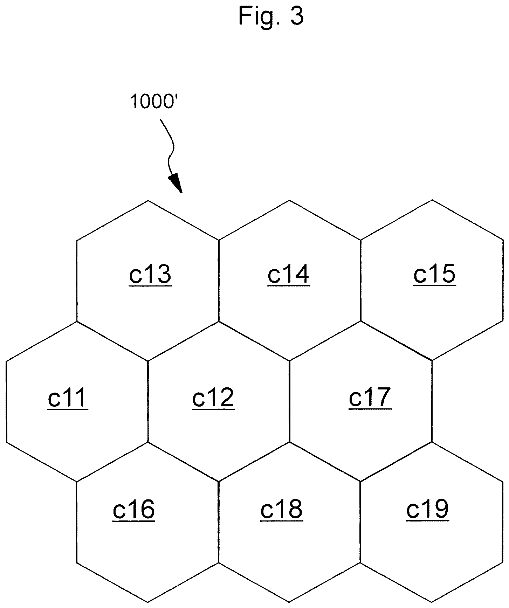

Further neighboring radio cells c13, .., c19 with respect to cell c12 are depicted by figure 3, said further neighboring radio cells c13, .., c19 depicting a further portion 1000' of the cellular communications network 1000 (Fig. 2a).

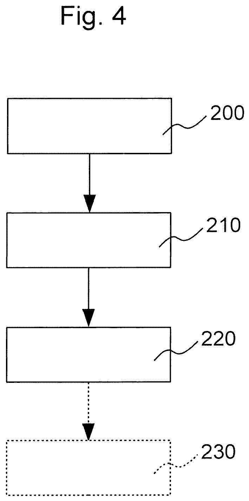

Figure 4 schematically depicts a simplified flow chart of a method according to an embodiment.

In a first step 200, terminal 10 (figure 2a) maintains a first set of at least n many radio cells of said communications network 1000. The parameter n is equal to or greater than 3 and presently chosen to n = 11. Only those radio cells c1, .., c11 a quality measure value of which exceeds a first threshold are comprised within the first set of presently llradio cells. I.e., radio cell c12 is not part of the first set of radio cells according to the embodiments.

According to an embodiment, said first threshold may be chosen depending on the value of parameter n. For example, if n=12, the first threshold may be chosen such that exactly 12 radio cells exceed said first threshold.

For example, according to an embodiment, when initializing terminal 10 within the radio cell c1, prior to said step 200 of maintaining the first set of radio cells, the terminal 10 may determine said first set of radio cells, e.g. by per se known radio measurements. For example, terminal 10 may perform measurements of a reference signal receive power (RSRP) of various neighboring cells c2, c3, .. and may include those radio cells into the first set of radio cells which comprise the n many (presently 12) best RSRP values.

After that, in step 210 (figure 4), the terminal 10 determines whether a quality measurement value of a further radio cell c12, which is not comprised in the first set of radio cells, exceeds a predetermined second threshold, which is greater than said first threshold.

Said step of determining 210 may e.g. comprise repeatedly (e.g., periodically or sporadically or according to a temporal random or pseudorandom pattern) performing RSRP measurements, wherein eventually radio cell c12 is detected or even found to comprise a quality measure value which exceeds said second threshold.

In this case, i.e. if said quality measure value of the further radio cell c12 exceeds said second threshold, the terminal 10 may modify, cf. step 220 of figure 4, said first set of radio cells by including said further radio cell c12 to said first set, whereby a second set of radio cells is obtained.

Optionally, to keep the number of radio cells comprised within the mentioned sets of radio cells constant, after including the further radio cell c12, the currently worst radio cell previously comprised within the first set of radio cells, i.e. the cell exhibiting the lowest RSRP value, may be cancelled from the first set to obtain the second set of radio cells.

Advantageously, according to an embodiment, this second set of radio cells is reported in step 230 to a further device, e.g. to base station 20.

The above-explained procedure according to the embodiments enables the terminal 10 to notify a base station 20 or further elements of the communications network 1000 from time to time on various radio cells detected in the course of its measurements, said cells being represented by the first set and the second set according to the embodiments.

This advantageously enables to forward downlink data transmissions to the terminal 10 without precise knowledge as to its present geographical position on a strict per-radio cell basis.

Further, this advantageously enables to avoid frequent handovers as known from conventional systems, which are particularly inefficient for low data rate or even sporadic traffic from/to the terminal 10.

In contrast to conventional signaling procedures involved in handover processes, which require numerous signaling messages whenever a terminal moves from one cell to a neighbouring radio cell, the reporting of a modified set of radio cells such as e.g. the second set, according to an embodiment, cf. step 230 of figure 4, only has to be performed with a comparatively low frequency thus not overburdening the air interface between terminal 10 and the base station 20.

The principle according to the embodiments will be explained in further detail below with reference to the figures 2a, 2b, 2b, 3 and 5a, 5b.

Initially, the terminal 10 is supposed to be switched off and thus not connected to the network 1000. After switching the terminal 10 on, it determines a first set S1 of n many (presently n = 12) radio cells of the communications network 1000, wherein a quality measure (here: RSRP as known from LTE) of each of said 12 radio cells exceeds a first threshold. Said first set S1 - as well as one or more further sets S2, .. - may e.g. be stored in a storage device of the processing unit 11 of the terminal 10.

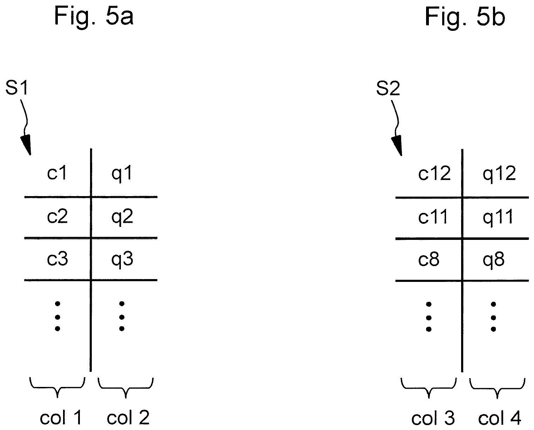

Figure 5a exemplarily depicts an ordered table representing the first set S1 of radio cells. In a first column coll the cell identifier c1, c2, c3, ... is depicted. In a second column col2, the associated quality measure value q1, q2, q3, ... for each cell c1, c2, c3, ... is depicted.

I.e., an initial determination of the first set S1 of radio cells yields the table according to figure 5a, wherein a quality measure value q1 has been determined for the first cell c1, and so on. Presently, a reference signal receive power, RSRP, as known from conventional LTE systems is used as a quality measure in the sense of the embodiments.

As it is well known, usually those radio cells which are closed to the geographic position of the terminal 10 will be associated with comparatively large RSRP values. However, this is not necessarily the case in radio environments with poor line of sight (LOS) conditions, i.e. environments with a high degree of multi-path propagation due to reflections and the like.

In step 200 (figure 4), the terminal maintains said first set S1 of 12 radio cells which may also be considered the strongest radio cells as seen from the position of the terminal 10 within cell c1 in terms of RSRP values.

When moving through the network 1000 as indicated e.g. by arrow a1, the terminal 10 may from time to time, i.e. periodically, determine 210 (figure 4) whether a quality measure value (here: RSRP) of a further radio cell c12 presently not comprised in the first set S1 (figure 5a) exceeds a predetermined second threshold, which is greater than said first threshold.

This means that the detected further radio cell c12 is associated with a better RSRP value as compared to the e.g. the RSRP value of at least the worst radio cell presently comprised in the first set S1.

In this case, i.e. if said quality measure value of the further radio cell c12 exceeds the second threshold, the terminal 10 modifies 220 (figure 4) said first set S1 by including said further radio cell c12 to said first set S1, whereby a second set S2 is obtained, cf. figure 5b. In the course of the modification, said further cell c12 may be positioned in line of the table S2 corresponding to its RSRP value, so that the second S2 again comprises an ordered list or table of radio cells regarding their quality measure value.

The second set S2 of radio cells, cf. figure 5b, is exemplarily arranged in a table having columns, col3, col4 similar to the table of the first set S1 depicted by figure 5a.

As can be seen from figure 5b, which corresponds to the terminal 10 being located within radio cell c12, cf. figure 2c, said radio cell c12 is positioned in the first line of the table of figure 5b because it has the highest associated quality measure value q12.

According to the principle of the embodiments, only after obtaining a modified set of radio cells, which corresponds to the second set S2 of figure 5b, such second set S2 is reported to a further device, e.g. to the base station 20.

However, while the terminal 10 was moving along the paths a1, a2, i.e. prior to arriving within cell c12, the determining step 210 of figure 4 has not yet yielded a further radio cell c12 exceeding the predetermined second threshold, such cell not yet being comprised in the first set, because the terminal 10 has passed the cells c1, c7, c9, c10, c11 which have already previously been included in the first set S1 (figure 5a) of radio cells. In other words, only upon arriving at cell c12, for the first time , a further radio cell, namely cell c12, is detected which exceeds the second threshold and which has not yet been included in the first set S1 of radio cells. This triggers the modification as already explained above, wherein the second set S2 of radio cells is obtained.

In step 230, as also already explained above, said second set S2 is reported to the base station 20 which is thereby enabled to efficiently forward downlink data transmissions to the terminal 10 exploiting the knowledge on the position of terminal 10 derived from the second set S2.

In contrast to numerous handover signalling messages, which would have been required for conventional handover procedures during the roaming of terminal 10 through cells c1, c7, c9, c11, c12, according to the present embodiments, only one single modification of the cell sets S1, S2 is required, and one single reporting step 230, namely reporting the second set S2 to the base station 20 is required for updating with sufficient precision the location information of terminal 10 at the network side, e.g. at the base station 20.

According to a preferred embodiment, the parameter n is chosen to be greater than 7, preferably greater than 10 to reduce the frequency of reporting dated sets of radio cells.

Evidently, according to a further embodiment, after obtaining the second set S2 of radio cells, again a single step of or periodically performed steps of determining in the sense of step 210 of figure 4 may be performed, i.e. the terminal 10 looking for yet another radio cell a quality measure value of which may exceed the second threshold, said another cell not yet being part of the presently considered second set S2. In this case, the second set S2 of radio cells may be modified as with the above-explained transition from set S1 to set S2, and so on.

Generally, according to an embodiment, whenever a new set of radio cells is derived by the terminal 10, it may advantageously be reported to any entity on the network side, preferably to a currently or previously serving base station 20. However, according to a further embodiment, the terminal 10 is not required to report every such event or new set, respectively. Rather, according to a further embodiment, the terminal 10 may also influence, particularly reduce the rate of reporting 230.

Also, according to a further embodiment, the terminal 10 may alter the parameter n and/or the parameter m, preferably depending on RSRP measurements and/or an operational state of said terminal 10 and/or the type and/or data rate (e.g., mean data rate) of traffic handled by the terminal 10.

According to a further preferred embodiment, the second threshold, which influences the rate of modification of a present set S1 of radio cells, is chosen such that it is greater than a quality measure value of the cell of the first set S1 (figure 5a) with the m-th best quality measure value within said first set S1, wherein in m ranges between 1 and m-1, wherein in preferably m = 1. In other words, when m is chosen to equal one, m=1, the second threshold is greater than the quality measure value q1 of the radio cell c1 with the best quality measure value within said first set S1. Likewise, when performing a determining step similar to step 210 of figure 4 based on the second set S2 as depicted by figure 5b, when m is chosen to equal 1, the second threshold is chosen such that it is greater than the quality measure value q12 of the presently best radio cell 12 of said second set S2, and so on.

A particular advantage of the principle according to the embodiments is based on the fact that said terminal 10 leaves a present set of radio cells, i.e. the first set S1, unmodified if the determination step 210 yields that a further detected radio cell 12 does not exceed the second threshold. In this case, likewise, no reporting to any external entities such as the base station 20 is necessary, because the structure and contents of the present set S1 of radio cells has not changed.

According to a further embodiment, the terminal 10 may determine the first set S1 based on radio measurements, as already explained above. Alternatively or in addition, the determination of the first set S1 of radio cells may consider control information received from a further device 20, 40 of the network 1000 and/or a geographical location of the terminal 10 and/or a geographical location of the base station 20 serving the terminal 10, and the like.

According to further embodiments, terminal 10 may also modify the first set S1 and/or any further set S2, .. of radio cells depending on the above-referenced information.

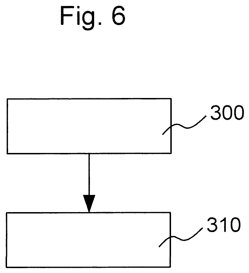

A further aspect of the embodiments is embodied by a transmission coordinator device 1010, which may e.g. be implemented within a base station 20 as depicted by figure 1. The transmission coordinator device 1010 receives (cf. step 300 of the flow chart of Fig. 6) from a terminal 10 according to the embodiments the first set S1 and/or a second set S2. According to other embodiments, further potentially modified sets of radio cells, which may be obtained by the terminal 10 based on a second set S2 and further determination steps 210 in the fashion of the determining step 210 of figure 4, maybe received by the transmission coordinator device 1010. The transmission coordinator device 1010 forwards, cf. step 310 of Fig. 6, downlink data to be transmitted to said terminal 10 depending on such received sets S1 and/or S2 or the like thus advantageously exploiting the location information provided therein.

In effect, the principle of the embodiments enables a terminal 10 to be provided with downlink information in a precise and efficient manner without requiring numerous handover signaling messages as defined in conventional systems. Rather, at least for specific types of traffic, such as sporadic or low (mean) data-rate traffic, a terminal 10 of a cellular communications network 1000 and/or a base station 20 or an entity comprising the functionality of the transmission coordinator device 1010 may be operated according to the principle according to the embodiments thus avoiding overburdening an air interface between devices 10, 20 and/or further interfaces such as e.g. an interface to an MME.

According to a further embodiment, the transmission coordinator device 1010 may forward, cf. step 310 of Fig. 6, downlink data to be forwarded to the terminal 10 via a radio cell having the greatest quality measure value of the first set and/or the second set of radio cells. Suppose that recently, the transmission coordinator device 1010 has received a second set S2 (Fig. 5b) as determined by the terminal 10 in accordance with the embodiments explained above. In this case, the transmission coordinator device 1010 may forward downlink data to the terminal 10 based via the radio cell c12, since it has the greatest quality measure value q12 as can be seen from the table representing the second set S2 of figure 5b.

Alternatively or in addition, the device 1010 may forward, cf. step 310 of Fig. 6, said downlink data to the terminal 10 via a radio cell associated with the last uplink traffic transmitted by the terminal 10.

Alternatively or in addition, the device 1010 may forward, cf. step 310 of Fig. 6, downlink data to said terminal 10 via a predetermined number of k' many radio cells of the first set S1 and/or the second set S2, wherein k' is greater than 1.

Alternatively or in addition thereto, device 1010 may perform paging within a location area associated with the terminal 10, wherein said location area may be larger than a UE centric tracking area.

Generally, according to an embodiment, a first transmission attempt by device 1010 may be performed within a last reported best cell e.g. cell c1 in the case of a last reported set S1 or cell c12 in the case of a last reported set S2. According to an embodiment, if these attempts for data transmission to terminal 10 have not been successful, it may be followed by scheduled data transmissions within said k' many surrounding cells or paging within k' many surrounding cells and scheduled data transmission in one of said surrounding cells.

If these further measures have neither been successful, i.e. the data transmission to the terminal 10 could not be performed, paging within the complete location area associated with the terminal 10 may be initiated by device 1010.

As mentioned above, the functionality of the device 1010 may e.g. be integrated into one or more base stations 20, 40 of the communications network.

According to a further embodiment, once device 1010 or 20 receives a set S1, S2 of radio cells as considered according to the embodiments, it may forward such set to other devices 40 such as e.g. neighboring bases stations or the like.

According to Applicant's considerations, the principle according to the embodiments is particularly beneficial for implementing 5G (fifth-generation) mobile communications networks, because different kind of handovers could be supported by providing the principle according to the embodiments. As an example, for terminals engaged with high data volumes, e.g. video steaming or continuous transmissions, e.g. voice over 5G conventional handover (HO) processes or advanced HO process derived therefrom may be applied, whereas for terminals engaged with sporadic small data services, e.g. for instant messaging, the principle according to the embodiments, as exemplified by the process of Fig. 4, may be applied. The principle according to the embodiments advantageously enables a new mobility concept which avoids "unnecessary" UE (user equipment) measurement reporting and handover signaling in an active state of the terminal 10 as long as the terminal 10 is moving within a specified area, e.g. within the coverage area of a set S1, S2 of radio cells explained above, which may also be denoted as a UE centric tracking area.

According to an embodiment, a decision which handover mode (conventional or according to the principle of the embodiments) should be applied may be controlled by a base station 20 or a radio cloud by configuration of the mobile terminal 10 with respective handover settings.

According to a further embodiment, a mobile terminal (UE) may report after an initial access to the network 1000 (Fig. 2a) the best (currently serving) cell c1 and e.g. up to 8 surrounding cells, i.e. a UE centric tracking area consists of n=9 radio cells. According to a further embodiment, as long as the mobile terminal 10 moves within the coverage area of these 9 cells no measurement report will be transmitted.

According to a further embodiment, a transmission in downlink and uplink for said terminal 10 may occur as soon as data is available .

According to a further embodiment, if the terminal 10 detects (cf. step 210 of Fig. 4) a new radio cell as best cell, not belonging to the set of 9 cells (as defined above), a new measurement report with e.g. 1+8 cells is transmitted, i.e. a new UE centric tracking area is defined by the mobile terminal.

According to a further embodiment, to support a 5G UE-centric concept, i.e. the UE context, consisting of e.g. a UE temporary identifier (C-RNTI), UE control channel search space, security settings etc., should not be changed as long as the UE remains within the UE centric tracking area, i.e. as long as a current set S1 of radio cells is not required to be changed, two alternatives might be defined:
According to a further embodiment, based on received cell ids (PCIs)) / global cell ids, the UE context may be transferred from a base station 20, which has received a report on a cell set S1, S2 and/or the measurement information of the terminal 10, towards other base stations 40 (Fig. 1), which may e.g. be located within the UE centric, tracking area. According to a further embodiment, a setup of tunnels between involved base stations associated e.g. with cell c1 and other cells c2, .. could be performed, thus exploiting backhaul signaling. By doing so, a UE context, control channel search space may be known in all cells of the UE centric tracking area.

According to a further embodiment, a context fetch from each cell within a cluster in which the terminal 10 is transmitting uplink data may be performed.

According to a further embodiment, new data in downlink to be transmitted to the terminal 10 may be treated in the following order: first transmission attempt within a last reported best cell or the last cell with uplink traffic, optionally followed by scheduled data within k' many surrounding cells or paging within k' many surrounding cells and scheduled data in one cell, optionally followed by paging within the location area.

According to a further embodiment, when a terminal 10 (Fig. 1) is switched on in a radio cell c1, the terminal 10 may be configured, preferably by the base station 20, with a new measurement event "Ax". According to a further embodiment, if the Ax event is reported to the base station 20, it may include cell ids (e.g. physical cell id, PCI) of e.g. up to 8 cells which received signal level is above a defined threshold and other elements. According to a further embodiment, the sets S1, S2 as explained above may comprise such cell ids, e.g. PCI values.

According to a further embodiment, a triggering condition of the event Ax followed by a reporting (cf. step 230 of figure 4) towards e.g. a base station 20, may be defined as: the terminal is in a coverage area of a cell c12 not listed within the last report (or set S1) and the received level of cell c12 is higher than the current received levels of the cells within the last report (S1). According to a further embodiment, then, the terminal 10 will send a new (for example, initial) Ax event to the serving base station 20 of radio cell c1.

According to a further embodiment, for transmission of data packets in said cell c1, preferably small data packets, a scheduled transmission of downlink and uplink data may be considered. According to a further embodiment, an activity timer may be started in the base station 20 and/or the terminal 10 after reception or transmission of data is finalized. According to a further embodiment, the terminal 10 may be shifted by the base station 20 or based on its own timer to a low-overhead connected state, i.e. no PMI (precoding matrix indicator), CQI (channel quality indicator) reports.

According to a further embodiment, especially if the terminal 10 does not move substantially within its cell c1, for new data in uplink direction, a scheduling request may be sent towards the base station 20, followed by a resource grant, or a connectionless transmission. According to an embodiment, a bearer service is connectionless, if all switches/routers on a bearer path associated with said bearer service need not to be configured in advance of a forwarding of a packet. According to a further embodiment, the terminal 10 may include a PCI / global cell id of the cell towards the last measurement report was sent to support a context fetch as mentioned above.

According to a further embodiment, for new data in downlink direction, a scheduled transmission may be performed.

According to a further embodiment, considering a movement of terminal 10 from cell c1 via cell c7 towards cell c9, when there is no data in downlink and uplink, i.e. no UE transmission, no information is sent towards base station 20 about the terminal's movement.

According to a further embodiment, when the terminal 10 is within radio cell c9, when there is new data for transmission in uplink direction, according to an embodiment, the terminal 10 may measure the radio cell c9 as currently best server (having highest quality measure value), wherein a scheduling request towards a base station serving cell c9 may be sent, followed by a resource grant or a connectionless transmission.

According to a further embodiment, as a fall back, a RACH (random access channel) access with timing advance and the like may be performed by the terminal 10, optionally followed by a scheduling request.

According to a further embodiment, a transmission of received UE data from cell c9 towards cell c1 of base station 20 may be performed, as base station 20 may work as a mobility anchor for all data (downlink and uplink) within the UE centric tracking area.

According to a further embodiment, considering the terminal 10 moving from cell c9 towards cell c10, no UE transmission is performed, and when the terminal 10 arrives in cell c10, new data in downlink is supposed to be present for terminal 10. As cell c1 is not aware about the terminal's precise location (assumption that that no uplink traffic in cell c9 occurred), a scheduled transmission in downlink in cell 1 may be performed by the base station 20. According to a further embodiment, if no reaction of terminal is recognized upon this scheduled transmission, then the base station 20 may forward the downlink data to cells c2-c11, optionally followed by scheduled transmission(s) in downlink in cells c2-c11 or optionally followed by paging in cells c2-c11 (or any subset thereof), optionally followed by scheduling of the terminal in cell c10.

According to a further embodiment, if the base station 20 (providing cell c1) is 'aware' about the terminal's location in cell c9 based on previous uplink data, forwarding of downlink data to cell c9 may be performed followed by a scheduled transmission in downlink in cell c9. According to a further embodiment, if no reaction of terminal is recorded, then downlink data may be forwarded to cells c1-c8 and c10-c11, wherein according to a further embodiment, scheduled transmission in downlink cells c1-c8 and c10-c11 may be performed and/or paging in cells c1-c8 and c10-c11 followed by scheduling of terminal 10 in cell c10-

According to a further embodiment, if there is a movement of the terminal 10 from cell c11 towards cell c12, a RACH access may take place and a new measurement report (e.g., a set S1 or S2 or the like) may be transmitted towards the base station providing cell c12.

According to a further embodiment, an Ax event triggering a reporting may comprise PCIs of radio cells above a defined received level (for example, considering RSRP) with PCI_last. According to a further embodiment, based on the received PCI_last, information may be transmitted from the base station of cell c12 towards the other base station 20 of cell c1. Base station 20 may trigger a path switch to the base station of cell c12 towards MME.

Still further aspects and embodiments are listed below:
Context of the new Ax event: PCI_last or global cell ID towards the last Ax report was sent, PCIs (e.g. cell ids) of e.g. up to 8 cells which received signal level is above a defined threshold, PCI or global cell ID including tracking for cells belonging to a new UE centric tracking are (for error handling in case the "data paging" in the moving tracking are was not successful), may be an optional element.

The principle according to the embodiments advantageously reduces a number of signaling messages (especially on the air interface and towards MME), and an efficient tracking of mobile terminals 10 (UEs) is enabled, which is particularly efficient with small data packet services (e.g. low data rate, non-real time, delay-tolerant and sporadic traffic), thus being well-suited for implementation in a 5G network.

Also, unnecessary handover preparations may be avoided by applying the principle according to the embodiments.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Terminal (10) for a cellular communications network (1000), wherein said terminal (10) is configured to
- maintain (200) a first set (S1) of at least n many radio cells of said communications network (1000), wherein n is equal to or greater than three, wherein a quality measure (q) value of each of said n many radio cells, which depends on a received signal power associated with reference signals transmitted in said cells and received by said terminal (10), exceeds a first threshold,
- determine (210) whether a quality measure value of a further radio cell (c12), which is not comprised in the first set (S1), exceeds a predetermined second threshold, which is greater than said first threshold,
- if said quality measure value of said further radio cell (c12) exceeds said second threshold, modify (220) said first set (S1) by including said further radio cell (c12) to said first set (S1), whereby a second set (S2) is obtained,
- wherein said terminal (10) is configured to report (230) said first set (S1) and/or said second set (S2) to a further device, and to receive data depending on said first set (S1) and/or said second set (S2).

2. Terminal (10) according to claim 1, wherein said further device is a base station (20) of said communications network (1000) or a transmission coordinator device (1010).

3. Terminal (10) according to one of the preceding claims, wherein said terminal (10) is configured to, upon an initialization process or an initial access to said network (1000), determine said first set (S1) and to report said first set (S1) to a further device (20).

4. Terminal (10) according to one of the preceding claims, wherein said second threshold is chosen such that it is greater than a quality measure value of the cell of the first set (S1) with the m-th best quality measure value within said first set (S1), wherein m ranges between 1 and n-1, wherein preferably m = 1.

5. Terminal (10) according to one of the preceding claims, wherein n is greater than 7, preferably greater than 10.

6. Terminal (10) according to one of the preceding claims, wherein said terminal (10) is configured to, if said further radio cell (c12) does not exceed said second threshold, leave said first set (S1) unmodified, and particularly to not report said first set (S1).

7. Terminal (10) according to one of the preceding claims, wherein said terminal (10) is configured to determine said first set (S1) depending on at least one of: radio measurements, control information received from a further device of said network (1000), a geographical location of said terminal (10), a geographical location of a base station currently serving said terminal (10).

8. Method of operating a terminal (10) for a cellular communications network (1000), wherein said method comprises the following steps:
- maintaining (200) a first set (S1) of at least n many radio cells of said communications network (1000), wherein n is equal to or greater than three, wherein a quality measure (q) of each of said n many radio cells, which depends on a received signal power associated with reference signals transmitted in said cells and received by said terminal (10), exceeds a first threshold,
- determining (210) whether a quality measure value of further radio cell (c12), which is not comprised in the first set (S1), exceeds a predetermined second threshold, which is greater than said first threshold,
- if said quality measure value of said further radio cell (c12) exceeds said second threshold, modifying (220) said first set (S1) by including said further radio cell (c12) to said first set (S1), whereby a second set (S2) is obtained, wherein said terminal (10) reports (230) said first set (S1) and/or said second set (S2) to a further device, and receiving data depending on said first set (S1) and/or said second set (S2).

9. Method according to claim 8, wherein said terminal (10) performs, particularly when there is new data for transmission in an uplink direction, one or more of the following steps: sending a scheduling request towards a base station having a highest quality measure value of said first set (S1) and/or said second set (S2), and/or performing a connectionless transmission in the uplink direction, and/or performing a random access channel, RACH, access.

10. Transmission coordinator device (1010) for a cellular communications network (1000), wherein said transmission coordinator device (1010) is configured to receive from a terminal of said network (1000),
- a first set (S1) of at least n many radio cells of said communications network (1000), wherein n is equal to or greater than three, wherein a quality measure (q) of each of said n many radio cells, which depends on a received signal power associated with reference signals transmitted in said cells and received by said terminal (10), exceeds a first threshold, and/or
- a second set (S2) of radio cells that is obtained from modifying said first set (S1) using a second threshold greater than said first threshold,
and to forward downlink data to be transmitted to said terminal (10) depending on said first set (S1) and/or said second set (S2).

11. Transmission coordinator device (1010) according to claim 10, wherein said transmission coordinator device (1010) is configured to forward said downlink data to said terminal (10)
- via a radio cell having the greatest quality measure value of the first set (S1) and/or the second set (S2), and/or
- via a radio cell associated with a last uplink traffic transmitted by said terminal (10), and/or
- via a predetermined number of k' many radio cells of the first set (S1) and/or the second set (S2), wherein k' is greater than one, and/or
- via paging within a location area associated with the terminal (10).

12. Transmission coordinator device (1010) according to claim 10 or 11, wherein said transmission coordinator device (1010) is configured to perform one or more of the following steps:
- transfer a UE context and/or a UE identifier associated with a terminal (10) to one or more further devices, wherein preferably said one or more further devices are associated with a radio cell of said first set (S1) and/or said second set (S2),
- set up a signalling tunnel with a further device, wherein preferably said further device is associated with a radio cell of said first set (S1) and/or said second set (S2).

13. Base station (20) for a cellular communications network (1000), wherein said base station (20) comprises at least one transmission coordinator device (1010) according to one of the claims 10 to 12.

14. Method of operating a transmission coordinator device (1010) for a cellular communications network (1000), wherein said method comprises the steps of: receiving (300) from a terminal of said network (1000), particularly from a terminal (10) according to one of the claims 1 to 7,
- a first set (S1) of at least n many radio cells of said communications network (1000), wherein n is equal to or greater than three, wherein a quality measure (q) of each of said n many radio cells, which depends on a received signal power associated with reference signals transmitted in said cells and received by said terminal (10), exceeds a first threshold, and/or
- a second set (S2) of radio cells that is obtained from modifying said first set (S1) using a second threshold greater than said first threshold, and
forwarding (310) downlink data to be transmitted to said terminal (10) depending on said first set (S1) and/or said second set (S2).

15. Method according to claim 14, wherein said transmission coordinator device (1010) forwards said downlink data to said terminal (10)
- via a radio cell having the greatest quality measure value of the first set (S1) and/or the second set (S2), and/or
- via a radio cell associated with a last uplink traffic transmitted by said terminal (10), and/or
- via a predetermined number of k' many radio cells of the first set (S1) and/or the second set (S2), wherein k' is greater than one, and/or
- via paging within a location area associated with the terminal (10).

16. Method according to one of the claims 14 to 15, wherein said transmission coordinator device (1010) forwards information on said first set (S1) and/or said second set (S2) to at least one further device (40).

## Patentansprüche

1. Endgerät (10) für ein zellulares Kommunikationsnetzwerk (1000), wobei das Endgerät (10) zu Folgendem ausgelegt ist
- Unterhalten (200) eines ersten Satzes (S1) von mindestens n vielen Funkzellen des Kommunikationsnetzwerks (1000), wobei n gleich oder größer als drei ist, wobei ein Qualitätsmaß(q)-Wert von jeder der n vielen Funkzellen, der von einer empfangenen Signalleistung abhängt, die mit Referenzsignalen verknüpft ist, die in den Zellen übertragen und vom Endgerät (10) empfangen werden, einen ersten Schwellwert überschreitet,
- Bestimmen (210), ob ein Qualitätsmaßwert einer weiteren Funkzelle (c12), die nicht im ersten Satz (S1) umfasst ist, einen vorbestimmten zweiten Schwellwert, der größer ist als der erste Schwellwert, überschreitet,
- wenn der Qualitätsmaßwert der weiteren Funkzelle (c12) den zweiten Schwellwert überschreitet, Ändern (220) des ersten Satzes (S1) durch Beinhalten der weiteren Funkzelle (c12) im ersten Satz (S1), wodurch ein zweiter Satz (S2) erhalten wird,
- wobei das Endgerät (10) dazu ausgelegt ist, den ersten Satz (S1) und/oder den zweiten Satz (S2) einer weiteren Vorrichtung zu melden (230) und Daten zu empfangen, die vom ersten Satz (S1) und/oder vom zweiten Satz (S2) abhängig sind.

2. Endgerät (10) nach Anspruch 1, wobei die weitere Vorrichtung eine Basisstation (20) des Kommunikationsnetzwerks (1000) oder eine Übertragungskoordinierungsvorrichtung (1010) ist.

3. Endgerät (10) nach einem der vorhergehenden Ansprüche, wobei das Endgerät (10) nach einem Initialisierungsprozess oder einem anfänglichen Zugriff auf das Netzwerk (1000) dazu ausgelegt ist, den ersten Satz (S1) zu bestimmen und den ersten Satz (S1) einer weiteren Vorrichtung (20) zu melden.

4. Endgerät (10) nach einem der vorhergehenden Ansprüche, wobei der zweite Schwellwert derart gewählt wird, dass er größer ist als ein Qualitätsmaßwert der Zelle des ersten Satzes (S1) mit dem m-besten Qualitätsmaßwert im ersten Satz (S1), wobei m zwischen 1 und n-1 liegt, wobei vorzugsweise m = 1.

5. Endgerät (10) nach einem der vorhergehenden Ansprüche, wobei n größer als 7, vorzugsweise größer als 10 ist.

6. Endgerät (10) nach einem der vorhergehenden Ansprüche, wobei das Endgerät (10), wenn die weitere Funkzelle (c12) den zweiten Schwellwert nicht überschreitet, dazu ausgelegt ist, den ersten Satz (S1) unverändert zu lassen und insbesondere den ersten Satz (S1) nicht zu melden.

7. Endgerät (10) nach einem der vorhergehenden Ansprüche, wobei das Endgerät (10) dazu ausgelegt ist, den ersten Satz (S1) in Abhängigkeit von mindestens einem von Folgendem zu bestimmen: Funkmessungen, Steuerinformationen, die von einer weiteren Vorrichtung des Netzwerks (1000) empfangen werden, einem geografischen Standort des Endgeräts (10), einem geografischen Standort einer Basisstation, die das Endgerät (10) derzeit bedient.

8. Verfahren zum Betreiben eines Endgeräts (10) für ein zellulares Kommunikationsnetzwerk (1000), wobei das Verfahren die folgenden Schritte umfasst:
- Unterhalten (200) eines ersten Satzes (S1) von mindestens n vielen Funkzellen des Kommunikationsnetzwerks (1000), wobei n gleich oder größer als drei ist, wobei ein Qualitätsmaß (q) von jeder der n vielen Funkzellen, der von einer empfangenen Signalleistung abhängt, die mit Referenzsignalen verknüpft ist, die in den Zellen übertragen und vom Endgerät (10) empfangen werden, einen ersten Schwellwert überschreitet,
- Bestimmen (210), ob ein Qualitätsmaßwert einer weiteren Funkzelle (c12), die nicht im ersten Satz (S1) umfasst ist, einen vorbestimmten zweiten Schwellwert, der größer ist als der erste Schwellwert, überschreitet,
- wenn der Qualitätsmaßwert der weiteren Funkzelle (c12) den zweiten Schwellwert überschreitet, Ändern (220) des ersten Satzes (S1) durch Beinhalten der weiteren Funkzelle (c12) im ersten Satz (S1), wodurch ein zweiter Satz (S2) erhalten wird, wobei das Endgerät (10) den ersten Satz (S1) und/oder den zweiten Satz (S2) einer weiteren Vorrichtung meldet (230), und Empfangen von Daten, die vom ersten Satz (S1) und/oder vom zweiten Satz (S2) abhängig sind.

9. Verfahren nach Anspruch 8, wobei das Endgerät (10), insbesondere wenn neuen Daten zur Übertragung in eine Uplinkrichtung vorliegen, einen oder mehrere der folgenden Schritte durchführt: Senden einer Planungsanforderung an eine Basisstation mit einem höchsten Qualitätsmaßwert des ersten Satzes (S1) und/oder des zweiten Satzes (S2) und/oder Durchführen einer verbindungslosen Übertragung in die Uplinkrichtung und/oder Durchführen eines Direktzugriffskanal(RACH)-Zugriffs.

10. Übertragungskoordinierungsvorrichtung (1010) für ein zellulares Kommunikationsnetzwerk (1000), wobei die Übertragungskoordinierungsvorrichtung (1010) dazu ausgelegt ist, von einem Endgerät des Netzwerks (1000) Folgendes zu empfangen,
- einen ersten Satz (S1) von mindestens n vielen Funkzellen des Kommunikationsnetzwerks (1000), wobei n gleich oder größer als drei ist, wobei ein Qualitätsmaß (q) von jeder der n vielen Funkzellen, der von einer empfangenen Signalleistung abhängt, die mit Referenzsignalen verknüpft ist, die in den Zellen übertragen und vom Endgerät (10) empfangen werden, einen ersten Schwellwert überschreitet, und/oder
- einen zweiten Satz (S2) von Funkzellen, der durch Ändern des ersten Satzes (S1) unter Verwendung eines zweiten Schwellwerts, der größer ist als der erste Schwellwert, erhalten wird,
und Downlinkdaten, die zum Endgerät (10) zu übertragen sind, in Abhängigkeit vom ersten Satz (S1) und/oder vom zweiten Satz (S2) weiterzuleiten.

11. Übertragungskoordinierungsvorrichtung (1010) nach Anspruch 10, wobei die Übertragungskoordinierungsvorrichtung (1010) dazu ausgelegt ist, Downlinkdaten wie folgt zum Endgerät (10) weiterzuleiten
- via eine Funkzelle mit dem größten Qualitätsmaßwert des ersten Satzes (S1) und/oder des zweiten Satzes (S2) und/oder
- via eine Funkzelle, die mit einem letzten Uplinkverkehr, der vom Endgerät (10) übertragen wurde, verknüpft ist, und/oder
- via eine vorbestimmte Anzahl von k' vielen Funkzellen des ersten Satzes (S1) und/oder des zweiten Satzes (S2), wobei k' größer als eins ist, und/oder
- via Paging in einem Standortbereich, der mit dem Endgerät (10) verknüpft ist.

12. Übertragungskoordinierungsvorrichtung (1010) nach Anspruch 10 oder 11, wobei die Übertragungskoordinierungsvorrichtung (1010) dazu ausgelegt ist, einen oder mehrere der folgenden Schritte durchzuführen:
- Übermitteln eines UE-Kontextes und/oder einer UE-Kennung, die mit einem Endgerät (10) verknüpft sind, zu einer oder mehreren weiteren Vorrichtungen, wobei vorzugsweise die eine oder die mehreren weiteren Vorrichtungen mit einer Funkzelle des ersten Satzes (S1) und/oder des zweiten Satzes (S2) verknüpft sind,
- Einrichten eines Signalisierungstunnels mit einer weiteren Vorrichtung, wobei vorzugsweise die weitere Vorrichtung mit einer Funkzelle des ersten Satzes (S1) und/oder des zweiten Satzes (S2) verknüpft ist.

13. Basisstation (20) für ein zellulares Kommunikationsnetzwerk (1000), wobei die Basisstation (20) mindestens eine Übertragungskoordinierungsvorrichtung (1010) nach einem der Ansprüche 10 bis 12 umfasst.

14. Verfahren zum Betreiben einer Übertragungskoordinierungsvorrichtung (1010) für ein zellulares Kommunikationsnetzwerk (1000), wobei das Verfahren die folgenden Schritte umfasst: Empfangen (300) von Folgendem von einem Endgerät des Netzwerks (1000), insbesondere von einem Endgerät (10) nach einem der Ansprüche 1 bis 7,
- einen ersten Satz (S1) von mindestens n vielen Funkzellen des Kommunikationsnetzwerks (1000), wobei n gleich oder größer als drei ist, wobei ein Qualitätsmaß (q) von jeder der n vielen Funkzellen, der von einer empfangenen Signalleistung abhängt, die mit Referenzsignalen verknüpft ist, die in den Zellen übertragen und vom Endgerät (10) empfangen werden, einen ersten Schwellwert überschreitet, und/oder
- einen zweiten Satz (S2) von Funkzellen, der durch Ändern des ersten Satzes (S1) unter Verwendung eines zweiten Schwellwerts, der größer ist als der erste Schwellwert, erhalten wird, und
Weiterleiten (310) von Downlinkdaten, die zum Endgerät (10) zu übertragen sind, in Abhängigkeit vom ersten Satz (S1) und/oder vom zweiten Satz (S2).

15. Verfahren nach Anspruch 14, wobei die Übertragungskoordinierungsvorrichtung (1010) die Downlinkdaten wie folgt zum Endgerät (10) weiterleitet
- via eine Funkzelle mit dem größten Qualitätsmaßwert des ersten Satzes (S1) und/oder des zweiten Satzes (S2) und/oder
- via eine Funkzelle, die mit einem letzten Uplinkverkehr, der vom Endgerät (10) übertragen wurde, verknüpft ist, und/oder
- via eine vorbestimmte Anzahl von k' vielen Funkzellen des ersten Satzes (S1) und/oder des zweiten Satzes (S2), wobei k' größer als eins ist, und/oder
- via Paging in einem Standortbereich, der mit dem Endgerät (10) verknüpft ist.

16. Verfahren nach einem der Ansprüche 14 bis 15, wobei die Übertragungskoordinierungsvorrichtung (1010) Informationen über den ersten Satz (S1) und/oder den zweiten Satz (S2) an mindestens eine weitere Vorrichtung (40) weiterleitet.

## Revendications

1. Terminal (10) pour un réseau de communications cellulaire (1000), dans lequel ledit terminal (10) est configuré pour
- maintenir (200) un premier ensemble (S1) d'au moins n nombreuses cellules radio dudit réseau de communications (1000), où n est égal ou supérieur à trois, où une valeur de mesure de qualité (q) de chacune desdites n nombreuses cellules radio, qui dépend d'une puissance de signal reçue associée à des signaux de référence transmis dans lesdites cellules et reçus par ledit terminal (10), dépasse un premier seuil,
- déterminer (210) si une valeur de mesure de qualité d'une autre cellule radio (c12), qui n'est pas comprise dans le premier ensemble (S1), dépasse un second seuil prédéterminé, qui est supérieur audit premier seuil,
- si ladite valeur de mesure de qualité de ladite autre cellule radio (c12) dépasse ledit second seuil, modifier (220) ledit premier ensemble (S1) en incluant ladite autre cellule radio (c12) audit premier ensemble (S1), moyennant quoi un second ensemble (S2) est obtenu,
- dans lequel ledit terminal (10) est configuré pour rapporter (230) ledit premier ensemble (S1) et/ou ledit second ensemble (S2) à un autre dispositif, et pour recevoir des données en fonction dudit premier ensemble (S1) et/ou dudit second ensemble (S2).

2. Terminal (10) selon la revendication 1, dans lequel ledit autre dispositif est une station de base (20) dudit réseau de communications (1000) ou un dispositif de coordinateur de transmission (1010).

3. Terminal (10) selon l'une des revendications précédentes, dans lequel ledit terminal (10) est configuré pour, lors d'un processus d'initialisation ou d'un accès initial audit réseau (1000), déterminer ledit premier ensemble (S1) et rapporter ledit premier ensemble (S1) à un autre dispositif (20).

4. Terminal (10) selon l'une des revendications précédentes, dans lequel ledit second seuil est choisi de sorte qu'il soit supérieur à une valeur de mesure de qualité de la cellule du premier ensemble (S1) avec la m-ième meilleure valeur de mesure de qualité à l'intérieur dudit premier ensemble (S1), où m est compris entre 1 et n-1, où de préférence m = 1.

5. Terminal (10) selon l'une des revendications précédentes, dans lequel n est supérieur à 7, de préférence supérieur à 10.

6. Terminal (10) selon l'une des revendications précédentes, dans lequel ledit terminal (10) est configuré pour, si ladite autre cellule radio (c12) ne dépasse pas ledit second seuil, laisser ledit premier ensemble (S1) non modifié, et en particulier pour ne pas rapporter ledit premier ensemble (S1).

7. Terminal (10) selon l'une des revendications précédentes, dans lequel ledit terminal (10) est configuré pour déterminer ledit premier ensemble (S1) en fonction d'au moins l'une parmi : des mesures radio, des informations de commande reçues en provenance d'un autre dispositif dudit réseau (1000), une localisation géographique dudit terminal (10), une localisation géographique d'une station de base desservant actuellement ledit terminal (10).

8. Procédé d'exploitation d'un terminal (10) pour un réseau de communications cellulaire (1000), dans lequel ledit procédé comprend les étapes suivantes :
- maintenir (200) un premier ensemble (S1) d'au moins n nombreuses cellules radio dudit réseau de communications (1000), où n est égal ou supérieur à trois, où une mesure de qualité (q) de chacune desdites n nombreuses cellules radio, qui dépend d'une puissance de signal reçue associée à des signaux de référence transmis dans lesdites cellules et reçus par ledit terminal (10), dépasse un premier seuil,
- déterminer (210) si une valeur de mesure de qualité d'une autre cellule radio (c12), qui n'est pas comprise dans le premier ensemble (S1), dépasse un second seuil prédéterminé, qui est supérieur audit premier seuil,
- si ladite valeur de mesure de qualité de ladite autre cellule radio (c12) dépasse ledit second seuil, modifier (220) ledit premier ensemble (S1) en incluant ladite autre cellule radio (c12) audit premier ensemble (S1), moyennant quoi un second ensemble (S2) est obtenu, où ledit terminal (10) rapporte (230) ledit premier ensemble (S1) et/ou ledit second ensemble (S2) à un autre dispositif, et recevoir des données en fonction dudit premier ensemble (S1) et/ou dudit second ensemble (S2).

9. Procédé selon la revendication 8, dans lequel ledit terminal (10) effectue, en particulier lorsqu'il y a de nouvelles données pour la transmission dans une direction de liaison montante, une ou plusieurs des étapes suivantes : envoyer une demande d'ordonnancement vers une station de base ayant une valeur de mesure de qualité la plus élevée dudit premier ensemble (S1) et/ou dudit second ensemble (S2), et/ou effectuer une transmission sans connexion dans la direction de liaison montante, et/ou effectuer un accès à un canal d'accès aléatoire, RACH.

10. Dispositif de coordinateur de transmission (1010) pour un réseau de communications cellulaire (1000), dans lequel ledit dispositif de coordinateur de transmission (1010) est configuré pour recevoir en provenance d'un terminal dudit réseau (1000),
- un premier ensemble (S1) d'au moins n nombreuses cellules radio dudit réseau de communications (1000), où n est égal ou supérieur à trois, où une mesure de qualité (q) de chacune desdites n nombreuses cellules radio, qui dépend d'une puissance de signal reçue associée à des signaux de référence transmis dans lesdites cellules et reçus par ledit terminal (10), dépasse un premier seuil, et/ou
- un second ensemble (S2) de cellules radio qui est obtenu à partir de la modification dudit premier ensemble (S1) en utilisant un second seuil supérieur audit premier seuil,
et pour réacheminer des données de liaison descendante à transmettre vers ledit terminal (10) en fonction dudit premier ensemble (S1) et/ou dudit second ensemble (S2).

11. Dispositif de coordinateur de transmission (1010) selon la revendication 10, dans lequel ledit dispositif de coordinateur de transmission (1010) est configuré pour réacheminer lesdites données de liaison descendante vers ledit terminal (10)
- via une cellule radio ayant la plus grande valeur de mesure de qualité du premier ensemble (S1) et/ou du second ensemble (S2), et/ou
- via une cellule radio associée à un dernier trafic de liaison montante transmis par ledit terminal (10), et/ou
- via un nombre prédéterminé de k' nombreuses cellules radio du premier ensemble (S1) et/ou du second ensemble (S2), où k' est supérieur à un, et/ou
- via radiomessagerie à l'intérieur d'une zone de localisation associée au terminal (10).

12. Dispositif de coordinateur de transmission (1010) selon la revendication 10 ou 11, dans lequel ledit dispositif de coordinateur de transmission (1010) est configuré pour effectuer une ou plusieurs des étapes suivantes :
- transférer un contexte UE et/ou un identifiant UE associé à un terminal (10) à un ou plusieurs autres dispositifs, où de préférence lesdits un ou plusieurs autres dispositifs sont associés à une cellule radio dudit premier ensemble (S1) et/ou dudit second ensemble (S2),
- établir un tunnel de signalisation avec un autre dispositif, où de préférence ledit autre dispositif est associé à une cellule radio dudit premier ensemble (S1) et/ou dudit second ensemble (S2).

13. Station de base (20) pour un réseau de communications cellulaire (1000), dans laquelle ladite station de base (20) comprend au moins un dispositif de coordinateur de transmission (1010) selon l'une des revendications 10 à 12.

14. Procédé d'exploitation d'un dispositif de coordinateur de transmission (1010) pour un réseau de communications cellulaire (1000), dans lequel ledit procédé comprend les étapes consistant à : recevoir (300) en provenance d'un terminal dudit réseau (1000), en particulier en provenance d'un terminal (10) selon l'une des revendications 1 à 7,
- un premier ensemble (S1) d'au moins n nombreuses cellules radio dudit réseau de communications (1000), où n est égal ou supérieur à trois, où une mesure de qualité (q) de chacune desdites n nombreuses cellules radio, qui dépend d'une puissance de signal reçue associée à des signaux de référence transmis dans lesdites cellules et reçus par ledit terminal (10), dépasse un premier seuil, et/ou
- un second ensemble (S2) de cellules radio qui est obtenu à partir de la modification dudit premier ensemble (S1) en utilisant un second seuil supérieur audit premier seuil, et
réacheminer (310) des données de liaison descendante à transmettre vers ledit terminal (10) en fonction dudit premier ensemble (S1) et/ou dudit second ensemble (S2).

15. Procédé selon la revendication 14, dans lequel ledit dispositif de coordinateur de transmission (1010) réachemine lesdites données de liaison descendante vers ledit terminal (10)
- via une cellule radio ayant la plus grande valeur de mesure de qualité du premier ensemble (S1) et/ou du second ensemble (S2), et/ou
- via une cellule radio associée à un dernier trafic de liaison montante transmis par ledit terminal (10), et/ou
- via un nombre prédéterminé de k' nombreuses cellules radio du premier ensemble (S1) et/ou du second ensemble (S2), où k' est supérieur à un, et/ou
- via radiomessagerie à l'intérieur d'une zone de localisation associée au terminal (10).

16. Procédé selon l'une des revendications 14 à 15, dans lequel ledit dispositif de coordinateur de transmission (1010) réachemine des informations sur ledit premier ensemble (S1) et/ou ledit second ensemble (S2) vers au moins un autre dispositif (40).
